# EUROPÄISCHE PATENTANMELDUNG

(11) **EP 4 253 947 A1**
(43) Veröffentlichungstag der Anmeldung: **04.10.2023**
(21) Anmeldenummer: 23156432.9
(22) Anmeldetag: 14.02.2023
(51) Int. Cl.: G01N 21/91

(54) **VERFAHREN ZUM PRÜFEN EINES BAUTEILS**

(30) Priorität: 29.03.2022 DE 102022107445
(71) Anmelder: MTU Aero Engines AG, 80995 München (DE)
(72) Erfinder: Zenzinger, Günter, 80995 München (DE); Goegelein, Anian, 80995 München (DE); Baron, Hans-Uwe, 80995 München (DE)

(57) **Zusammenfassung**

Die vorliegende Erfindung betrifft ein Verfahren zum Prüfen eines Bauteils (30) mit einer Eindringprüfung (10), bei welchem
i) ein Eindringmittel (31) auf eine Oberfläche (30.1) des Bauteils (30) aufgebracht wird (11);
ii) durch Strahlen (15) der Oberfläche mit einem festen Strahlgut (40) zumindest ein Teil des Eindringmittels (31) von der Oberfläche (30.1) entfernt wird;
iii) die Oberfläche (30.1) nach dem Strahlen (15) optisch erfasst wird (17).

## Beschreibung

### Technisches Gebiet

Die vorliegende Erfindung betrifft ein Verfahren zum Prüfen eines Bauteils mit einer Eindringprüfung.

### Stand der Technik

Bei der Eindringprüfung wird ein Eindringmittel auf die Bauteiloberfläche aufgebracht, um bspw. Fehlstellen in der Oberfläche sichtbar zu machen, z. B. Risse oder Lunker. Das Eindringmittel legt sich bspw. aufgrund der Kapillarkräfte in den Fehlstellen an, sodass diese bei einer anschließenden optischen Kontrolle gut sichtbar sind. Auf diese Weise kann das Bauteil, z. B. nach der Herstellung oder auch im Zuge einer Revision nach einer bestimmten Betriebsdauer, untersucht werden, womit sich bspw. einer weiteren Rissausbreitung und folglich einem Versagen im Betrieb vorbeugen lässt.

Wie nachstehend im Einzelnen diskutiert, kann das Bauteil z. B. für eine Strömungsmaschine vorgesehen sein, insbesondere für ein Flugtriebwerk. Aufgrund der Folgen, die ein Bauteilversagen in diesem Anwendungsumfeld haben kann, kommt der Bauteilgüte und -prüfung besondere Bedeutung zu.

### Darstellung der Erfindung

Der vorliegenden Erfindung liegt das technische Problem zugrunde, ein vorteilhaftes Verfahren zum Prüfen eines Bauteils mit einer Eindringprüfung anzugeben.

Dies wird erfindungsgemäß mit dem Verfahren gemäß Anspruch 1 gelöst. Bei diesem wird die Bauteiloberfläche nach dem Aufbringen des Eindringmittels und vor der optischen Erfassung gestrahlt, wird nämlich mit einem festen Strahlgut etwaiges überschüssiges Eindringmittel zumindest anteilig wieder von der Bauteiloberfläche abgetragen. Das Strahlgut an sich ist fest, also in Partikelform vorgesehen, und es wird in einem Fluidstrom auf die Bauteiloberfläche geführt. Hierbei lassen sich die Prozessparameter, wie bspw. der Druck und die Einwirkdauer, gut kontrollieren bzw. einstellen, was z. B. hinsichtlich der Reproduzierbarkeit von Vorteil sein kann. Zudem lässt sich bspw. einem übermäßigen Entfernen des Eindringmitte ls, also einem Auswaschen aus den Fehlstellen vorbeugen, insbesondere aus kleinen Rissen. Die mit der erhöhten Reproduzierbarkeit einhergehende Objektivierung kann z. B. auch hinsichtlich einer Automatisierung von Vorteil sein, also eine Bauteilprüfung mit verringerten Eingriffen oder auch ganz ohne menschliche Eingriffe erlauben.

Bevorzugte Ausgestaltungen finden sich in der gesamten Offenbarung und insbesondere in den Ansprüchen, wobei bei der Darstellung der Merkmale nicht immer im Einzelnen zwischen den unterschiedlichen Anspruchskategorien unterschieden wird. Wird bspw. ein bestimmtes Eindringprüfverfahren beschrieben, ist dies zugleich als Offenbarung einer entsprechenden Eindringprüfanlage zu verstehen, und umgekehrt.

Die Erfinder haben ein unerwünschtes Auswaschen insbesondere beobachtet, wenn das Eindringmittel z. B. mit einem in Lösungsmittel getränkten Pinsel mechanisch abgetragen wird. Dieser händische Prozess lässt sich auch kaum automatisieren, und die Prozessparameter (z. B. Geschwindigkeit und Lösungsmittelmenge) hängen dann stark vom jeweiligen Prüfbeauftragten ab. Dabei kann ein partielles Auswaschen jedenfalls hinsichtlich der Vergleichbarkeit nachteilig sein, und vollständig ausgewaschene Fehlstellen werden gar nicht mehr detektiert.

Generell ist die Eindringprüfung bevorzugt eine fluoreszierende Eindringprüfung (FPI), ist also ein fluoreszierendes Eindringmittel vorgesehen. Bei der optischen Erfassung kann dieses dann z. B. durch eine UV-Bestrahlung sichtbar gemacht werden, womit sich gute Leuchtdichtekontraste erreichen lassen. Im Ergebnis können damit auch relativ kleine Fehlstellen, in denen sich das Eindringmittel angelagert hat, sichtbar gemacht werden.

Gemäß einer bevorzugten Ausführungsform wird die Oberfläche vor dem Strahlen zwischengereinigt, bspw. durch Aufsprühen eines Lösungsmittels. Mit dem Strahlen muss dann also nicht das gesamte überschüssige Eindringmittel von der Oberfläche abgetragen werden, was bspw. hinsichtlich des Ressourcenverbrauchs von Vorteil sein kann. Es kann dann z. B. gezielt nur dort gestrahlt werden, wo nach dem Zwischenreinigen Eindringmittel auf der Oberfläche verbleibt.

In bevorzugter Ausgestaltung wird die Oberfläche, zusätzlich zu der optischen Erfassung in Schritt iii), auch nach dem Zwischenreinigen und vor dem Strahlen optisch erfasst. Im Falle eines fluoreszierenden Eindringmittels kann nach dem Zwischenreinigen bspw. mit UV-Strahlung bestrahlt werden und können so jene Stellen der Oberfläche identifiziert werden, an den noch Eindringmittel vorhanden ist. Das anschließende Strahlen hilft dann zu differenzieren, ob es sich um tatsächliche Fehlstellen, aus denen das Eindringmittel beim Strahlen nicht abgetragen wird, oder um beim Zwischenreinigen nicht entfernte Rückstände handelt.

Generell gibt es bevorzugt einen Entwicklungsschritt, in dem das Eindringmittel entwickelt wird. Im Zuge dessen kann sich das Eindringmittel bspw. vertieft in einer Fehlstelle anlagern bzw. kann ein erhöhter Kontrast zum umgebenden Oberflächenbereich geschaffen werden. Gemäß einer bevorzugten Ausführungsform gibt es jedenfalls einen Entwicklungsschritt zwischen den Schritten ii) und iii), optional kann es einen zusätzlichen Entwicklungsschritt vor dem Strahlen geben (etwa nach dem Zwischenreinigen und vor der ersten optischen Erfassung, vgl. den vorstehenden Absatz).

Wie eingangs erwähnt, richtet sich der vorliegende Gegenstand insbesondere auf eine Automatisierung, weswegen das Strahlen in bevorzugter Ausgestaltung robotergeführt erfolgt. So kann bspw. eine Düse, aus der das Strahlgut ausgegeben wird, mit Hilfe eines Roboterarms entlang der Oberfläche geführt werden. Dabei können, bspw. kombiniert mit einer vorhergehenden automatisierten Bilderfassung und -verarbeitung, gezielt jene Stellen angefahren werden, die zur Unterscheidung von Fehlstellen/Eindringmittel-Rückständen gestrahlt werden sollen.

Gemäß einer bevorzugten Ausführungsform wird das Strahlgut in Form eines Flüssigkeits-Festkörper-Gemisches auf die Oberfläche gestrahlt, also in Mischung mit einer Flüssigkeit. Je nach Mischverhältnis können die Partikel also in einem Flüssigkeitsstrom oder können mit der Flüssigkeit benetzte Partikel auf die Oberfläche geführt werden. Die Flüssigkeit ist in bevorzugter Ausgestaltung ein Lösungsmittel, vorzugsweise Ethanol. Die mit dem Lösungsmittel befeuchteten Partikel können, aufgrund des Lösungsmittels, das Eindringmittel einerseits gut chemisch von der Oberfläche lösen, bspw. FPI-Öl. Das Strahlgut kann das gelöste bzw. angelöste Eindringmittel dann andererseits gut von der Oberfläche abtragen und zugleich einen mechanischen Reinigungseffekt erzielen.

Im Allgemeinen kann das Flüssigkeits-Festkörper-Gemisch aus einer gemeinsamen Düse ausgegeben werden, wird dieser also das Gemisch zugeführt und dort in Strahlform abgegeben. Bei einer alternativ bevorzugten Ausführungsform werden das Strahlgut und die Flüssigkeit jeweils in einer eigenen Düse abgegeben und werden dann diese Einzelstrahlen zusammengeführt, gelangen sie also überlagert auf die Oberfläche.

Unabhängig von der Art der Zufuhr (über eine gemischte oder aus separaten Düsen) haben die Partikel des Strahlguts in bevorzugter Ausgestaltung eine Größe von mindestens 0,1 mm. Durch Vorgabe einer Mindestgröße kann bspw. einem unerwünschten Auswaschen von kleinen Rissen vorgebeugt werden. Eine vorteilhafte Obergrenze der Partikelgröße, die unabhängig von der Mindestgröße von Interesse sein kann und offenbart sein soll, kann z. B. bei 0,4 mm liegen.

Als festes Strahlgut können im Allgemeinen beliebige Festkörper in Partikelform vorgesehen sein, bspw. Glaspartikel. Eine weitere Form von festem Strahlgut kann Trockeneis sein. Trockeneis reinigt besonders Rückstandslos, da das CO₂ sich nach dem Auftreffen auf die zu reinigende Fläche verflüchtigt. Das feste Strahlgut kann in Kombination mit Lösemittel oder auch alleine einen Reinigungseffekt erzeugen. In bevorzugter Ausgestaltung sind Kunststoffpartikel vorgesehen, etwa ein Kunststoffgranulat. Geeignete Kunststoffe können bspw. Urea oder Melamin Mesh 60-80 sein. Eine weitere bevorzugte Ausgestaltung ist die Kombination von Trockeneis mit Lösemittel (Ethanol), dies kann aus einer oder zwei Düsen auf die zu reinigende Fläche aufgebracht werden Wie bereits erwähnt, erfolgt die Eindringprüfung bevorzugt im FPI-Verfahren. Kommt hierbei z. B. ein FPI-Öl zur Anwendung, kann dieses einerseits unerwünschte Rückstände auf der Oberfläche ergeben; andererseits könnte ein Auswaschen von Fehlstellen die feine Auflösung des FPI-Verfahrens zunichtemachen, weswegen die Vorteile des vorliegenden Verfahrens im Besonderen zum Tragen kommen.

Bei dem geprüften bzw. untersuchten Bauteil handelt es sich in bevorzugter Ausgestaltung um ein Bauteil einer Strömungsmaschine, es wird auch auf die Anmerkungen im Rahmen der Stand-der-Technik-Würdigung verwiesen. Insbesondere die zum Anordnen im Gaskanal vorgesehenen Bauteile, wie z. B. Schaufelblätter und Kanalplatten etc., können besonderen Belastungen ausgesetzt sein, weswegen der zuverlässigen Detektion von Fehlstellen eine besondere Bedeutung beikommt.

Gemäß einer bevorzugten Ausführungsform handelt es sich bei dem Bauteil um ein generativ hergestelltes Bauteil. Dieses kann also bspw. anhand eines Datenmodells Schicht für Schicht aus einem zuvor formlosen oder formneutralen Stoff aufgebaut sein, etwa in einem Pulverbettverfahren. Aufgrund des schichtweisen Aufbaus kann die Oberfläche komplex sein, was umgekehrt bei der Eindringprüfung Rückstände von Eindringmittel begünstigen bzw. eine besondere Güte des Prüfungsergebnisses erfordern kann. Deshalb kommen die eingangs erwähnten Vorteile und die damit einhergehende Objektivierung vorteilhaft zum Tragen.

Die Erfindung betrifft auch eine Eindringprüfanlage, die ein Modul zum Aufbringen des Eindringmittels, ein Modul zum Strahlen der Oberfläche und ein Modul zur optischen Erfassung der Oberfläche aufweist. Prinzipiell ist auch eine (teilweise) Integration der Module denkbar, bevorzugt wird das Bauteil jedoch im Zuge der Prüfung von Modul zu Modul geführt.

Das Modul zur optischen Erfassung kann insbesondere mit einer Kamera und einem Bildverarbeitungssystem ausgestattet sein, sodass die Auswertung automatisiert erfolgen kann. In dem Modul zum Strahlen des Bauteils kann bspw. ein mit der bzw. den Düsen ausgestatteter Roboterarm vorgesehen sein, vgl. die vorstehende Beschreibung. Ferner sind auch weitere Module möglich, etwa zum Zwischenreinigen und/oder Entwickeln.

Die Erfindung betrifft ferner die Verwendung einer solchen Eindringprüfanlage in einem vorstehend geschilderten Verfahren.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: in schematischer Darstellung ein Mantelstromtriebwerk, zur Illustration eines vorteilhaften Anwendungsumfelds der Eindringprüfung;
- Figur 2: den Ablauf einer Eindringprüfung in einem Ablaufdiagramm;
- Figur 3a-c: ausgewählte Schritte bei der Eindringprüfung gemäß Figur 2 in einer Detaildarstellung.

### Bevorzugte Ausführung der Erfindung

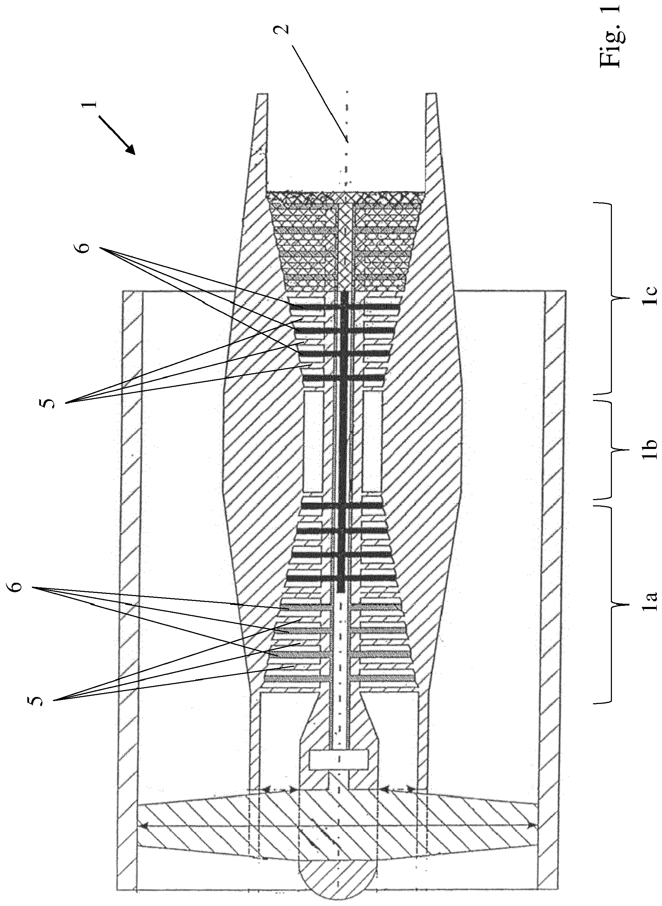

**Fig. 1** zeigt eine Strömungsmaschine 1, konkret ein Mantelstromtriebwerk, in einem Axialschnitt. Die Strömungsmaschine 1 gliedert sich funktional in Verdichter 1a, Brennkammer 1b und Turbine 1c. Sowohl der Verdichter 1a als auch die Turbine 1c sind jeweils aus mehreren Stufen aufgebaut, jede der Stufen setzt sich aus einem Leit- und einem darauf folgenden Laufschaufelkranz zusammen. Im Verdichter 1a wird die angesaugte Luft komprimiert, sie wird dann in der nachgelagerten Brennkammer 1b mit hinzugemischtem Kerosin verbrannt. Das nachstehend diskutierte Bauteil kann insbesondere zur Anwendung in einer solchen Strömungsmaschine 1 vorgesehen sein, es kann sich bspw. um eine dann im Verdichter- oder Heißgaskanal angeordnete Schaufel handeln (Leitschaufel 5 oder Laufschaufel 6), aber auch um ein anderweitig in der Maschine verbautes Bauteil.

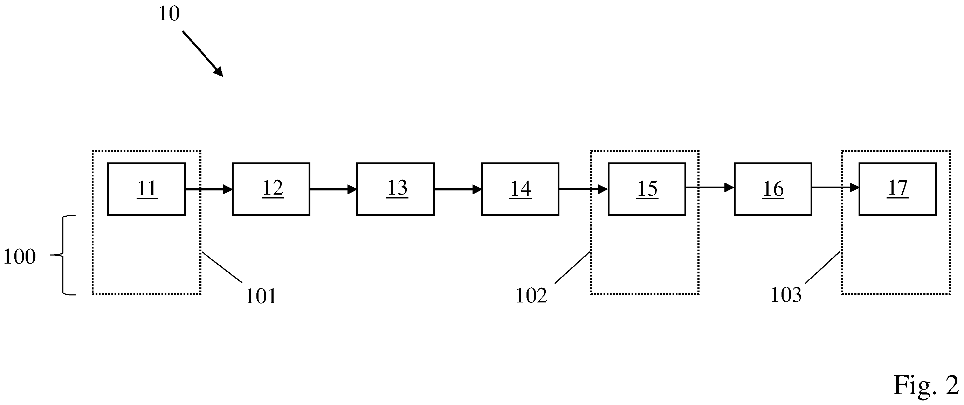

**Fig. 2** illustriert eine Eindringprüfung 10 in einem schematischen Ablaufdiagramm. Nach einem Aufbringen 11 eines Eindringmittels wird zunächst zwischengereinigt 12, bevor das Eindringmittel ein erstes Mal entwickelt wird 13. Anschließend wird die Oberfläche ein erstes Mal optisch erfasst 14, wobei detektierte Stellen anschließend durch Strahlen 15 nachbehandelt werden, vgl. die untenstehende Beschreibung im Detail. Danach wird das Eindringmittel ein weiteres Mal entwickelt 16, bevor die Oberfläche erneut optisch erfasst wird 17. Wie sich aus der Beschreibungseinleitung im Einzelnen ergibt, sind einige der Schritte optional.

In einer Eindringprüfanlage 100 können die unterschiedlichen Schritte in unterschiedlichen Modulen vorgenommen werden, insbesondere das Aufbringen 11 in einem ersten Modul 101, das Strahlen 15 in einem zweiten Modul 102 und das optische Erfassen 17 in einem dritten Modul 103, wobei in Letzterem auch die erste optische Erfassung 14 erfolgen kann.

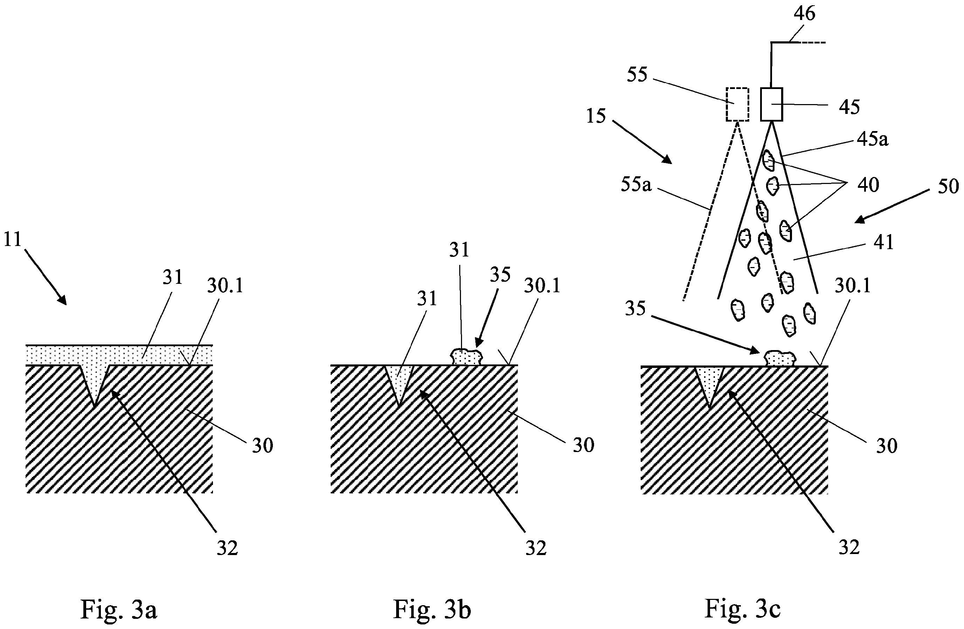

**Fig. 3a** illustriert das Aufbringen 11 in einer Detailansicht. Das Eindringmittel 31 wird in einem Überschuss auf die zu untersuchende Oberfläche 30.1 eines Bauteils 30 aufgebracht, wobei es sich in etwaigen Fehlstellen 32 (Risse, Poren, Lötfehler etc.) anlegt.

**Fig. 3b** zeigt das Bauteil 30 nach dem Zwischenreinigen 12, von der Oberfläche 30.1 wurde also überschüssiges Eindringmittel weitgehend entfernt. Das Eindringmittel 31 verbleibt jedoch in der Fehlstelle 32, zudem gibt es einen nicht richtig entfernten Rest 35 auf der Oberfläche 30.1. Bei der ersten optischen Erfassung 14 können die Fehlstelle 32 und der Rest 35 nicht sauber voneinander unterschieden werden, deshalb wird das Bauteil 30 dem Strahlen 15 zugeführt.

Dieses ist in **Fig. 3c** illustriert. Die Oberfläche 30.1 wird mit einem festen Strahlgut 40 gestrahlt, vorliegend Kunststoffpartikeln mit einer Größe zwischen 0,1 mm und 0,4 mm. Diese werden als Gemisch 50 mit einer Flüssigkeit 41 auf die Oberfläche 30.1 geführt, in diesem Beispiel in Mischung mit Ethanol. Das Lösungsmittel kann den Rest 35 chemisch von der Oberfläche lösen, das Strahlgut 40 bewirkt dann einen mechanischen Abtrag bzw. -transport. Umgekehrt wird das in der Fehlstelle 32 angeordnete Eindringmittel 31 nicht ausgewaschen, kann die Fehlstelle 32 also weiterhin detektiert werden. Bei der anschließenden optischen Erfassung ist dann nur noch die Fehlstelle 32 als solche zu erkennen.

Beim Strahlen kann eine Düse 45, an welcher das Strahlgut 40 ausgegeben wird, von einem Roboterarm 46 geführt entlang der Oberfläche 30.1 bewegt werden. Dabei kann eine einzige Düse das Gemisch 50 mit der Flüssigkeit 41 und dem Strahlgut 40 ausgeben. Alternativ können für das Strahlgut 40 und die Flüssigkeit 41 aber auch separate Düsen 45, 55 (nur strichliert angedeutet) vorgesehen sein, deren Strahlen 45a, 55a dann überlagert werden.

### BEZUGSZEICHENLISTE

| | |
|---|---|
| Strömungsmaschine | 1 |
| Verdichter | 1a |
| Brennkammer | 1b |
| Turbine | 1c |
| Leitschaufel | 5 |
| Laufschaufel | 6 |
| Eindringprüfung | 10 |
| Aufbringen | 11 |
| Zwischenreinigen | 12 |
| Erstmalige Entwicklung des Eindringmittels | 13 |
| Optische Erfassung der Oberfläche (erste) | 14 |
| Strahlen | 15 |
| Weitere Entwicklung des Eindringmittels | 16 |
| Optische Erfassung der Oberfläche (erneute) | 17 |
| Bauteil | 30 |
| Zu untersuchende Oberfläche | 30.1 |
| Eindringmittel | 31 |
| Fehlstellen | 32 |
| Nicht richtig entfernter Rest | 35 |
| Strahlgut | 40 |
| Flüssigkeit | 41 |
| Düsen | 45, 55 |
| Strahlen | 45a, 55a |
| Roboterarm | 46 |
| Gemisch | 50 |
| Eindringprüfanlage | 100 |
| Erstes Modul | 101 |
| Zweites Modul | 102 |
| Drittes Modul | 103 |

## Patentansprüche

1. Verfahren zum Prüfen eines Bauteils (30) mit einer Eindringprüfung (10), bei welchem
i) ein Eindringmittel (31) auf eine Oberfläche (30.1) des Bauteils (30) aufgebracht wird (11);
ii) durch Strahlen (15) der Oberfläche (30.1) mit einem festen Strahlgut (40) zumindest ein Teil des Eindringmittels (31) von der Oberfläche (30.1) entfernt wird;
iii) die Oberfläche (30.1) nach dem Strahlen (15) optisch erfasst wird (17).

2. Verfahren nach Anspruch 1, bei welchem die Oberfläche (30.1) vor dem Strahlen (15) zwischengereinigt wird (12).

3. Verfahren nach Anspruch 2, bei welchem die Oberfläche (30.1) nach dem Zwischenreinigen (12) und vor dem Strahlen (15) optisch erfasst wird (14).

4. Verfahren nach einem der vorstehenden Ansprüche, mit einem Entwicklungsschritt zum Entwickeln (16) des Eindringmittels (31) zwischen den Schritten ii) und iii).

5. Verfahren nach einem der vorstehenden Ansprüche, bei welchem eine Düse (45), aus welcher das Strahlgut (40) ausgegeben wird, in Schritt ii) robotergeführt entlang der Oberfläche (30.1) geführt wird.

6. Verfahren nach einem der vorstehenden Ansprüche, bei welchem das Strahlgut (40) in Schritt ii) als Gemisch (50) mit einer Flüssigkeit (41) auf die Oberfläche (30.1) gestrahlt wird.

7. Verfahren nach Anspruch 6, bei welchem die Flüssigkeit (41) ein Lösungsmittel, insbesondere Ethanol, aufweist.

8. Verfahren nach Anspruch 6 oder 7, bei welchem die Flüssigkeit (41) und das Strahlgut (40) jeweils als Strahl (45a, 55a) aus einer separaten Düse (45, 55) abgegeben werden und die Strahlen (45a, 55a) der Oberfläche (30.1) vorgelagert zusammengeführt werden.

9. Verfahren nach einem der vorstehenden Ansprüche, bei welcher das Strahlgut (40) in Form von Partikeln mit einer Größe von mindestens 0,1 mm und höchstens 0,4 mm vorgesehen ist.

10. Verfahren nach einem der vorstehenden Ansprüche, bei welchem das Strahlgut (40) in Form von Kunststoffpartikeln oder Trockeneis vorgesehen ist.

11. Verfahren nach einem der vorstehenden Ansprüche, bei welchem das Eindringmittel (31) fluoreszierend ist und bei der optischen Erfassung mit UV-Strahlung beleuchtet wird.

12. Verfahren nach einem der vorstehenden Ansprüche, wobei es sich bei dem Bauteil (30) um ein Bauteil einer Strömungsmaschine (1), insbesondere eines Flugtriebwerks, handelt.

13. Verfahren nach einem der vorstehenden Ansprüche, wobei es sich bei dem Bauteil (30) um ein generativ gefertigtes Bauteil handelt.

14. Eindringprüfanlage (100) zum Prüfen eines Bauteils (30), mit
einem ersten Modul (101), das zum Aufbringen (11) eines Eindringmittels (31) auf eine Oberfläche (30.1) des Bauteils (30) eingerichtet ist;
einem zweiten Modul (102), das zum Strahlen (15) der Oberfläche (30.1) des Bauteils (30) mit einem festen Strahlgut (40) eingerichtet ist;
einem dritten Modul (103), das zum optischen Erfassen (17) der Oberfläche (30,1) nach dem Strahlen (15) eingerichtet ist.
15. Verwendung einer Eindringprüfanlage (100) nach Anspruch 14 in einem Verfahren nach einem der Ansprüche 1 bis 13.
